# EUROPEAN PATENT APPLICATION

(11) **EP 3 180 991 A1**
(43) Date of publication of application: **21.06.2017**
(21) Application number: 16174726.6
(22) Date of filing: 16.06.2016
(51) Int. Cl.: A23K 30/10

(54) **A METHOD FOR PRODUCING A SILAGE, ESPECIALLY CORN SILAGE, AND SILAGE PRODUCED BY THIS METHOD**

(30) Priority: 18.12.2015 LT 2015104
(71) Applicant: Aleksandro Stulginskio Universitetas, 53361 Kauno r. (LT); Uzgiriu zemes ukio bendrove, 69173 Marijampoles r. (LT)
(72) Inventor: SARAUSKIS, Egidijus, 47127 Kaunas (LT); SINKEVICIUS, Rymantas, 68150 Marijampole (LT); SINKEVICIUS, Dovydas, 68150 Marijampole (LT); SINKEVICIUS, Jaunius, 68150 Marijampole (LT); SAKALAUSKAS, Antanas, 53336 Ringaudai, Kauno r. (LT); ROMANECKAS, Kestutis, 53336 Ringaudai, Kauno r. (LT); KRIAUCIUNIENE, Zita, 53352 Akademija, Kauno r. (LT)
(74) Representative: Draugeliene, Virgina Adolfina

(57) **Abstract**

The invention relates to the feeds producing field, in particular to the preservation of green plants to produce feeds such as silage. The method of producing silage, especially corn silage, comprises the steps: filling prepared for ensiling biomass into a fermentation container, sealing the fermentation container and allowing the biomass to ferment until is reached the predetermined required fermentation rate. Obtained fermented silage has moisture content of 60-70 %, which further is dehydrated in a dryer at low temperature at which degradation of carbohydrates and proteins contained in the fermented silage is prevented and obtained a fermented-dehydrated silage has such content of moisture which is suitable to process the fermented-dehydrated silage to obtain a form of briquettes, pellets, powder or wrapped rolls.

## Description

### Technical field to which invention refers

The invention relates to the feeds producing field, in particular to the preservation of raw materials such as green plants to produce feeds for livestock such as silage, particularly corn silage.

### Relevant prior Art

Corn can be ensiled in trenches, plastic containers or big bags. Easily fermentable corn does not require any additives. For good silage fermentation it is important for a short time to fill container with biomass, to compress the biomass and to seal the container.

Chinese patents CN 10242298 (A), 25/4/2012, and CN 1046214416 (A), 20/5/2015 disclose a method for producing a silage, including corn silage, which comprises the following steps: preparation of biomass for ensiling, filling the silage container with prepared biomass, adding salt, pressing and sealing the biomass in the silage container. Thus prepared biomass moisture content is 65-70 % and it is allowed to ferment.

International patent application WO2015075816 (A1), 22/11/2013 discloses a method for producing a corn silage comprising filling a milled corn biomass into a flexible water-resistant bag, holding the bag in a form so that the charging port thereof faces upward. In the form, compressing downward the milled corn material in the bag using a press machine so as to allow a syrup to drip from the corn material. Then the syrup released from the charging port is removed and the port is closed so that the material is kept inside of the bag in an anaerobic condition. The bag is wrapped with a binding tape to suppress expansion of the bag and then allowed to ferment.

The fermented corn silage produced using the above-described methods retains the main quality parameters only in stabilised anaerobic (air-free) conditions. This silage usually is of 60-70 % moisture. Silage prepared by this way is difficult to transport, store and use in automatic feeders. The shelf-life of the fermented silage is short, varying from six to eight months.

Chinese patent CN101632486, 27/1/2010 discloses an automatic silage production line in which silage processing technology comprises the following steps: (a) adding the dark green plants into a rotating feeder and removing the impurities; (b) kneading the dark green plants in the step (a) by a kneader; (c) dehydrating the dark green plants in the step (b); (d) adding bio-fermentation enzyme solvent into the dark green plants; (e) bundling the dark green plants; (f): film wrapping packing or bag packing the bundled dark green plants.

The above-disclosed method for producing silage, comprises dehydration step which is carried out before fermentation step, wherein for silage fermentation additionally is used bio-fermentation enzymes and after that the dark green plants are bundled and sealed. Such prepared silage is allowed to ferment and can be transported. However, its main quality indicators are retained only in stabilised anaerobic conditions. This may cause problems during the storage and transportation of the silage, because if the packaging is damaged the silage must be quickly fed to animals. If the damage of the packaging is not identified on time, butyric acid fermentation begins which spoils the silage in 1-2 months and the silage should be used.

### Technical problem to be solved

The invention is aimed to extend the period in which the silage quality indicators are stable irrespective of ambient temperatures; to simplify silage storage conditions, which should not necessarily be anaerobic and to improve conditions for the automation of storage, transport and animal feeding, while ensuring quality indicators of high-feed value silage.

### Disclosure of the invention

According to the proposed invention, the essence of the invention is that fermented silage, especially corn silage, obtained in the fermentation step of 65-70 % moisture content is dehydrated in a dryer at low temperature at which degradation of carbohydrates and proteins contained in the fermented silage is prevented, wherein obtained a fermented-dehydrated silage has such content of moisture which is suitable for processing the fermented-dehydrated silage in order to obtain a form of briquettes or pellets, or powder, or wrapped rolls.

Fermented-dehydrated silage has a moisture content of not more than 15 %.

Fermented silage is dehydrated by drying at a temperature of not more than 55°C.

Another advantageous embodiment of the invention is silage, especially corn silage, produced using the above-described method.

### Advantages of the invention

Fermented-dehydrated silage produced in accordance with the proposed method can be granulated, pressed in briquettes, wrapped in rolls or stored loose in aerobic conditions. Such silage meets the quality requirements raised for high-feed value silage and can be stored for up to two years irrespective of the storage temperature. The volume weight of fermented-dehydrated corn silage is by three times lower and, therefore, it is more comfortable and cheaper to transport. This silage is easier to use in automatic feeding systems. The fermented-dehydrated silage retains stable quality indicators in aerobic conditions. If fermented-dehydrated silage packaging is damaged during transportation or storage, it is not necessary to quickly feed the silage to animals.

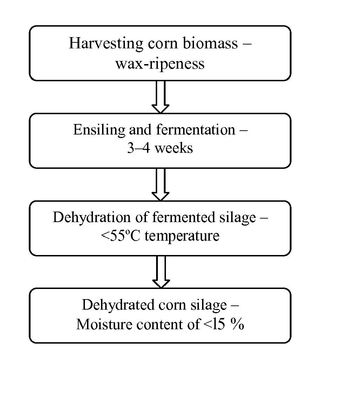

### Brief description of the drawing

The invention is explained in more detail in the drawing showing a technological scheme of producing fermented-dehydrated corn silage.

### Description of at least one way of carrying out the invention

To produce fermented corn silage, the aboveground green corn biomass is harvested when its dry matter content is above 30 % or grains are at the stage of wax-ripeness. The harvested biomass material is chopped and filled in fermentation container for example in silage trenches to ferment for 3-4 weeks until it reaches a fermentation rate in the range of 23-28. The corn silage fermented in silage trenches has a moisture content of 60-70 %. Then the fermented silage is transferred to a dryer where it is dehydrated at relatively low temperature (max 55°C) until the moisture content is reduced up to 15 %. Such fermented-dehydrated silage has a quality of high-feed value and a long stability time, whatever the ambient temperature may be. The fermented silage with a moisture content of 15 % is easy to granulate, press into briquettes and wrap in rolls. In turn, the conditions of silage storage, transport and use in automatic feeders are improved.

### Received results of analysis

By analysis of the quality indicators of fermented corn silage was -estimated, that fermentation rate was 29.8 %, metabolic energy (ME) - 11.1 MJ kg⁻¹ DM, crude ash - 4.83 % DM, crude protein - 7.65 % DM, crude fibre - 17.9 % DM.
Findings of the analysis of the quality indicators of fermented-dehydrated corn silage: moisture - 14.8 %, crude ash - 3.4 % DM, crude protein - 7.0 % DM, crude fibre - 14.9 % DM, starch content - 27.7 % DM, metabolic energy (ME) - 12.9 MJ kg⁻¹ DM, net energy for lactation (NEL) - 7.25 MJ kg⁻¹ DM.

## Claims

1. Method of producing silage, especially corn silage, comprising the steps:
- filling prepared for ensiling biomass, especially corn biomass, into a fermentation container,
- pressing the biomass in the fermentation container,
- sealing the fermentation container and allowing the biomass to ferment until is reached the required predetermined fermentation rate, wherein obtained a fermented silage has moisture content of 60-70 %, **characterised in that** after fermentation step is performed a dehydration step of the fermented silage in a dryer at low temperature at which degradation of carbohydrates and proteins contained in the fermented silage is prevented, wherein obtained a fermented-dehydrated silage has such content of moisture which is suitable for processing the fermented-dehydrated silage in order to obtain a form of briquettes, pellets, powder or wrapped rolls.

2. Method according to claim 1, **characterised in that** the fermented-dehydrated silage has a moisture content of not more than 15 %.

3. Method according to any one of claims 1 to 2, **characterised in that** the fermented silage is dehydrated by drying at a temperature of not more than 55°C.

4. Silage, especially corn silage, which is produced by the method according to any one of claims 1 to 3.
